# EUROPEAN PATENT SPECIFICATION

(11) **EP 2 480 222 B1**
(45) Date of publication and mention of the grant of the patent: **09.09.2020**
(21) Application number: 10819434.1
(22) Date of filing: 23.09.2010
(51) Int. Cl.: A61K 9/70, C12N 11/04, C08J 9/12

(54) **METHOD OF MAKING A LOW DENSITY POLYLACTIC ACID FOAM WITH IMPROVED DIMENSIONAL STABILITY**
VERFAHREN ZUR HERSTELLUNG EINES POLYMILCHSÄURE-SCHAUMSTOFFS NIEDRIGER DICHTE MIT VERBESSERTER DIMENSIONSSTABILITÄT
PROCÉDÉ DE FABRICATION D'UNE MOUSSE D'ACIDE POLYLACTIQUE DE FAIBLE DENSITÉ À STABILITÉ DIMENSIONNELLE AMÉLIORÉE

(30) Priority: 25.09.2009 US 245743 P
(43) Date of publication of application: 01.08.2012
(60) Divisional application: 13189317.4
(73) Proprietor: ARKEMA INC., King of Prussia PA 19406 (US)
(72) Inventor: VAN HORN, Brett L., King of Prussia PA 19406 (US); YACKABONIS, William E., Slatington PA 18080 (US)
(74) Representative: Arkema Patent
(86) International application number: PCT/US2010/049945
(87) International publication number: WO 2011/038081

(56) References cited:
- WO-A1-98/05484
- WO-A1-2008/121776
- WO-A2-02/50173
- US-A1- 2006 043 331
- US-A1- 2006 167 122
- US-A1- 2007 100 011
- US-A1- 2008 281 012

## Description

### FIELD OF THE INVENTION

The invention relates to a method of making a low density polylactic acid foam.

### BACKGROUND OF THE INVENTION

Carbon dioxide (CO₂) is used as a common blowing agent for production of foamed thermoplastics or polymeric foams. In particular, carbon dioxide is recognized as an environmentally acceptable blowing agent due to its inert nature and low global warming potential (GWP). There are limits on carbon dioxide and other commonly used blowing agents, however, particularly in producing low density foams. Low density foams often suffer from an unacceptable post-production collapse. In other words, the structure of the foam, e.g., closed cell, fails and the volume of the foam is reduced. This may be due, in part, to the fast diffusion of the carbon dioxide or other blowing agent out of the foamed product. Thus, carbon dioxide and other common blowing agents are often limited to foaming high density foams with sufficient mechanical strength to minimize or prevent collapse of the foam. Alternatively, additives are used or a modification to the polymer structure is required in order to maintain or improve dimensional stability of a low density foam.

US 2006/043331 A1 and WO2008/121776 A1 disclose foams obtained from a blowing agent composition comprising carbon dioxide in combination with a hydrofluoroolefin co-blowing agent, such as tetrafluoropropene or trifluoropropene.

US 2006/167122 A1 discloses a method of making a low density polylactic acid foam from a foamable composition comprising carbon dioxide as a blowing agent.

### SUMMARY OF THE INVENTION

The method of the present invention have been shown to produce low density foams with improved dimensional stability without requiring any modifications or addition of additives to the polymers.

The method of the invention is as disclosed in claim 1 and the appended claims.

### BRIEF DESCRIPTION OF THE DRAWINGS

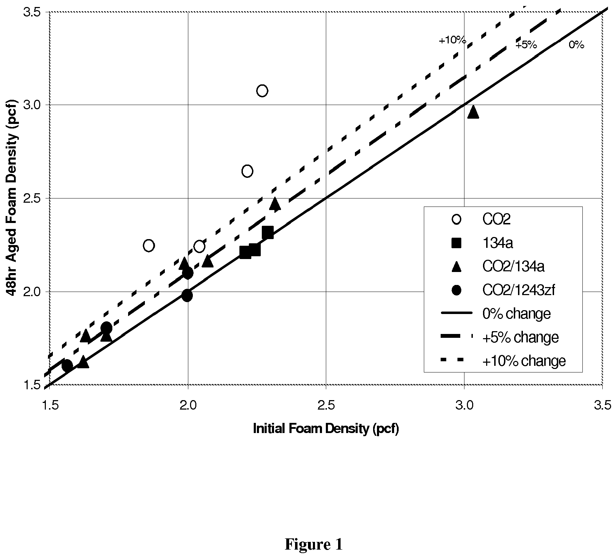

Figure 1 is a plot of the initial foam density versus the 48-hour aged foam density for foams with an initial density of less than 56 kg/m³ (3.5 pcf). In Figure 1, 1 pcf corresponds to 16 kg/m³.

### DETAILED DESCRIPTION OF THE INVENTION

As used herein, "blowing agent" is understood to include physical (e.g., dissolved gaseous agents) or chemical blowing agents (e.g., a gas generated by decomposition). A blowing agent is generally added to a molten polymer, e.g., in an extruder, and under the proper conditions, to initiate foaming to produce a foamed thermoplastic. The blowing agent expands the resin and forms cells (e.g., open or closed pores). As the resin hardens or cures a foam is produced with either the blowing agent trapped in the cells or ambient air displaces the blowing agent in the cells. The blowing agents discussed herein are preferred to be environmentally acceptable blowing agents (e.g., they are generally safe for the environment) as would be recognized by one of ordinary skill in the art.

As used herein, "foams" are understood to include thermoplastic polymer foams, foamed thermoplastics, foamed resins, and polymeric foams, which are used interchangeably. The "foam" or "foams" discussed herein generally refer to the resulting product. The foam may have an open, partially-open, or closed structure as known to one of skill in the art; preferably the foam may have a partially-open or closed cell structure, and more preferably the foam has a closed cell structure. The foams are deemed "biodegradable and/or biorenewable thermoplastics" because they will chemically break down over time or are produced from a renewable resource.

As used herein, the terms "dimensionally stable" and "dimensional stability" are used interchangeably to explain the state of the foam product in final form. A dimensionally stable foam will not suffer from a post-production collapse or "crush" (e.g., after the foam has been produced) of the foam structure or will only be affected to a minimal extent. The post-production collapse may occur at any period of time after production of the foam (e.g., during the curing process or some period of time later). Preferably, a dimensionally stable foam will have a percentage change in volume (or density) of less than about 50% after aging relative to the initial foam volume (or density), more preferably less than about 20% after aging relative to the initial foam volume (or density), even more preferably less than about 10% after aging relative to the initial foam volume (or density), even more preferably less than about 5% after aging relative to the initial foam volume (or density), and even more preferably less than about 2% after aging relative to the initial foam volume (or density). A foam exhibiting a decrease in volume will exhibit a corresponding increase in density.

As used herein, "density" is understood to mean a mass per unit volume of a material. The "low density" foams discussed herein generally have a density of less than or equal to about 50 kg/m³, preferably less than or equal to about 32 kg/m³, more preferably less than or equal to about 25 kg/m³. The "high density" foams are understood to include foams of higher densities.

As used herein, unless specified otherwise, the values of the constituents or components of the blowing agent or foam compositions are expressed in weight percent or % by weight of each ingredient in the composition. The values provided include up to and including the endpoints given.

According to the method of the present invention, a blowing agent composition comprises carbon dioxide and a co-blowing agent selected from the group consisting of 3,3,3-trifluoropropene, 2,3,3,3-tetrafluoropropene, trans-1,3,3,3-tetrafluoropropene, trans-1-chloro-3,3,3-trifluoropropene, and mixtures thereof.

The blowing agent comprises carbon dioxide. Carbon dioxide may be introduced in liquid or gaseous form (e.g., a physical blowing agent) or may be generated in situ while producing the foam (e.g., a chemical blowing agent). For instance, the carbon dioxide may be formed by decomposition of another constituent during production of the foamed thermoplastic. For example, a carbonate composition or polycarbonic acid may be added to the foamable resin and carbon dioxide will be generated upon heating during the extrusion process. While carbon dioxide is a common blowing agent, it is often used as a single blowing agent. It has been found that using carbon dioxide as a sole blowing agent in producing low density foams often leads to the post-production collapse problem. Surprisingly, when the carbon dioxide is combined with other select co-blowing agents, the post-production collapse problem is minimized or eliminated.

Accordingly, the blowing agent composition also includes a co-blowing agent in addition to carbon dioxide. The co-blowing agent may be a low emissivity co-blowing agent. A co-blowing agent may generally be selected from the group consisting of halogenated blowing agents, such as hydrofluorocarbons, hydrochlorofluorocarbons, hydrofluoroethers, hydrofluoroolefins, hydrochlorofluoroolefins, hydrobromofluoroolefins, hydrofluoroketones, hydrochloroolefins, and fluoroiodocarbons, alkyl esters, such as methyl formate, water, and mixtures thereof.

As used herein, "halogenated blowing agents" include blowing agents comprising a halogen element (Group 17 of the periodic table). "Hydrofluorocarbon" and "HFC" are interchangeable terms referring to an organic compound containing hydrogen, carbon, and fluorine. The compound is substantially free of halogens other than fluorine. "Hydrochlorofluorocarbons" and "HCFC" are interchangeable terms referring to an organic compound containing hydrogen, carbon, chlorine, and fluorine. "Hydrofluoroethers" and "HFE" are interchangeable terms referring to an organic compound containing hydrogen, fluorine, and one or more ether groups. "Hydrofluoroolefins" and "HFO" are interchangeable terms referring to an organic compound containing hydrogen, fluorine, and one or more carbon-carbon double bonds. "Hydrochlorofluoroolefins" and "HCFO" are interchangeable terms referring to an organic compound containing hydrogen, chlorine, fluorine, and one or more carbon-carbon double bonds. "Hydrobromofluoroolefins" and "HBFO" are interchangeable terms referring to an organic compound containing hydrogen, bromine, fluorine, and one or more carbon-carbon double bonds. "Hydrofluoroketones" and "HFK" are interchangeable terms referring to an organic compound containing hydrogen, fluorine, and one or more ketone groups. "Hydrochloroolefins" and "HCO" are interchangeable terms referring to an organic compound containing hydrogen, chlorine, and one or more carbon-carbon double bonds. "Fluoroiodocarbons" and "FIC" are interchangeable terms referring to an organic compound containing fluorine and iodine.

Generally, hydrofluorocarbons (HFCs) include HFC-134a (1,1,1,2-tetrafluoroethane), HFC-134 (1,1,2,2-tetrafluoroethane), HFC-125 (pentafluoroethane), HFC-152a (1,1-difluoroethane), HFC-143a (1,1,1-trifluoroethane), HFC-143 (1,1,2-trifluoroethane), HFC-227ea (1,1,1,2,3,3,3-heptafluoropropane), HFC-245fa (1,1,2,2,3-pentafluoropropane), HFC-245ca (1,1,2,2,3-pentafluoropropane), HFC-236fa (1,1,1,3,3,3-hexafluoropropane), HFC-365mfc (1,1,1,3,3-pentafluorobutane), HFC-4310mee (1,1,1,2,2,3,4,5,5,5-decafluoropentane), and mixtures thereof. In particular, a HFC is a C₂ to C₆ fluorine-containing alkane, such as a C₂ to C₃ fluorine-containing alkane. The fluorine-containing alkane may be a linear carbon chain, such as a fluorinated ethane or fluorinated propane, or may be a cyclic alkane, such as a fluorinated propane. Examples of HFC are HFC-134a (1,1,1,2-tetrafluoroethane), which is non-flammable or HFC-152a (1,1-difluorofluoroethane), which is flammable but which has a GWP of less than 150.

Hydrofluoroolefins (HFOs) include C₂-C₆ HFOs, such as C₃-C₄ HFOs. In particular, hydrofluoroolefins (HFOs) include HFO-1234yf (2,3,3,3-tetrafluoropropene), HFO-1234ze (E- and/or Z-1,3,3,3-tetrafluoropropene), HFO-1243zf (3,3,3-trifluoropropene), HFO-1225ye (E- and/or Z-1,2,3,3,3-pentafluoropropene), HFO-1336mzz (E- and/or Z-1,1,1,4,4,4-hexafluorobut-2-ene), and mixtures thereof.

Hydrochlorofluoroolefins (HCFOs) include C₃-C₆ HCFOs, such as C₃-C₄ HCFOS, in particular chlorofluoropropenes and dichlorofluoropropenes, and for example monochlorotrifluoropropenes. The chlorine atoms of the HCFO may be attached to an unsaturated carbon. In particular, hydrochlorofluoroolefins (HCFOs) may include HCFO-1233zd (E- and/or Z-1-chloro-3,3,3-trifluoropropene), HCFO-1233xf (2-chloro-3,3,3-trifluoropropene).

Hydrofluoroethers (HFEs) include HFE-125 (pentafluorodimethyl ether), HFE-134 (1,1,1',1'-tetrafluorodimethyl ether), HFE-143a (1,1,1-trifluoroethane), HFE-152a (difluoromethyl methyl ether), HFE-245fe2 (1,1,2,2-tetrafluoroethyl methyl ether), HFE-356mff2 (bis(2,2,2-trifluoroethyl) ether), HFE-7200 (C₄F₉OC₂H₅), HFE-7100 (C₄F₉OCH₃), and HFE-356mec (1,1,1,2,3,3,3-hexafluoro-3-methoxypropane).

Hydrochloroolefins include, for example, trans-1,2-dichloroethylene. Alkyl esters include, for example, alkyl formates, such as ethyl formate and methyl formate. A fluoroiodocarbon includes, for example, trifluoroiodomethane.

Environmentally acceptable co-blowing agents are hydrofluoroolefins, and hydrochlorofluoroolefins, and mixtures thereof.

In the method of the invention, the co-blowing agent is selected from the group consisting of 3,3,3-trifluoropropene (HFO-1243zf), 2,3,3,3-tetrafluoropropene (HFO-1234yf), trans-1,3,3,3-tetrafluoropropene (trans-HFO-1234ze), trans-1-chloro-3,3,3-trifluoropropene (trans-HCFO-1233zd), and mixtures thereof. In a preferred embodiment, the co-blowing agent is 3,3,3-trifluoropropene (HFO-1243zf). In another preferred embodiment, the co-blowing agent is 2,3,3,3-tetrafluoropropene (HFO-1234yf).

Particularly suitable co-blowing agents have low global warming potentials (GWPs). For example, hydrofluoroolefins are known to generally exhibit low GWPs. Thus, it is desirous to select a co-blowing agent with a GWP of less than 150, preferably less than 50, or more preferably, less than 20. In particular, 3,3,3-trifluoropropene (HFO-1243zf), 2,3,3,3-tetrafluoropropene (HFO-1234yf), trans-1,3,3,3-tetrafluoropropene (trans-HFO-1234ze), and mixtures thereof have beneficially low GWP values. Additionally, it is contemplated that a co-blowing agent is VOC free (i.e., free of volatile organic compounds) or has minimal VOC emissions.

In one exemplary embodiment, the co-blowing agent has a boiling point less than 30°C or more preferably less than 14°C at atmospheric pressure. In particular, the co-blowing agent is 3,3,3-trifluoropropene (HFO-1243zf), which has a boiling point of about -22 °C (-7.6 °F). In particular, the co-blowing agent is 2,3,3,3-tetrafluoropropene (HFO-1234yf), which has a boiling point of about -28.5 °C (-19.3 °F). In particular, the co-blowing agent is trans-2,3,3,3-tetrafluoropropene (E-HFO-1234ze), which has a boiling point of about -16 °C (3.2°F). It is not necessary to include a co-blowing agent with a higher boiling point in order to obtain the blowing agent composition which produces a foam with the desired dimensional stability.

This particular selection of carbon dioxide with a co-blowing agent as described herein allows for the production of a dimensionally stable, low density foam product. Low density foams made from known blowing agents or typical combinations of blowing agents have been shown to have poor dimensional stability because the foams decrease in volume over time (i.e., the foam collapses). For example, increasing the blowing agent content of solely carbon dioxide upwards of 8 wt% permitted production of foam that was initially of lower density but was dimensionally unstable, showing significant foam collapse during aging. In order to produce low density foams using general blowing agents, an additive is combined with the polymer or a change is made to the polymeric structure during formation or curing in order to stabilize the resulting foam structure. Typical additives known to be added to polymeric foams to improve dimensional stability include carbon nanoparticles, nanoclays, nanographites, glass fibers, etc. It was discovered, however, that the particular selection of blowing agents described herein resulted in the ability to produce low density foams with high dimensional stability without the need for any modifications or additions to the polymeric structure itself. The low density foams may be produced using known blowing agents in novel combinations, but surprisingly result in highly stable foams that do not suffer from post-production collapse over time.

The appropriate amount of blowing agent may be determined relative to the amount of resin composition used. In the method of the present invention, carbon dioxide is present in an amount of 3-15 wt%, preferably 4 - 12 wt%, most preferably 5 -10 wt% and the co-blowing agent is present in an amount of 1-5 wt%, more preferably 2-3 wt%. In particular, carbon dioxide may be present in an amount of 3-8 wt% and the co-blowing agent may be present in an amount of 1.5-5 wt%. In another embodiment, the total amount of blowing agent is between 5 and 15 wt%.

In the method of the present invention, a biodegradable or biorenewable foam is formed from a foamable biodegradable or biorenewable resin composition. The resin and foams are deemed "biodegradable and/or biorenewable" because they will chemically break down over time or are produced from a renewable resource. The biodegradable and/or biorenewable resin may be used in a mixture or blend with additional polymers not considered as biorenewable or biodegradable. The additional polymers include, for example, polyalkenyl aromatic polymers, such as polystyrene and styrene-acrylonitrile, polyolefins, such as polyethylene and polypropylene, acrylics, such as polymethyl methacrylate and polybutyl acrylate, and copolymers, and mixtures thereof. The resins of the present invention preferably contain biodegradable/biorenewable resins and additional polymers in a weight ratio of about 1:1 or more biodegradable/biorenewable resin to additional polymer, more preferably in a weight ratio of 3:1 or more biodegradable/biorenewable resin to additional polymer, and even more preferably in a weight ratio of 9:1 or more biodegradable/biorenewable resin to additional polymer.

It has been found that certain thermoplastics behave differently with respect to the structural collapse of the foam. For example, polystyrene has not shown the same degree of collapse as polylactic acid. Without wishing to be bound to a particular theory, one difference between the different classes of thermoplastics may be due, in part, to the amount of blowing agent that can be added to the resin composition and how quickly the blowing agent diffuses from the foam. For example, the solubility and diffusivity of carbon dioxide in polystyrene is believed to be less than that for polylactic acid. Without wishing to be bound by theory, it is believed that the carbon dioxide diffuses out of the foam faster than air is able to diffuse into the foam resulting in the collapse of the foam structure. Polylactic acid or polylactide (PLA) is a biodegradable, thermoplastic, aliphatic polyester derived from renewable resources, such as corn, starch, or sugarcane.

Accordingly, the biodegradable/biorenewable plastic for use in combination with the blowing agent compositions described herein is polylactic acid (PLA).

The term "polylactic acid" as used herein may refer to a polymer or copolymer containing at least 50 mol % of lactic acid monomer component units. Examples of the polylactic acid resin include, but are not limited to, (a) a homopolymer of lactic acid, (b) a copolymer of lactic acid with one or more aliphatic hydroxycarboxylic acids other than lactic acid, (c) a copolymer of lactic acid with an aliphatic polyhydric alcohol and an aliphatic polycarboxylic acid, (d) a copolymer of lactic acid with an aliphatic polycarboxylic acid, (e) a copolymer of lactic acid with an aliphatic polyhydric alcohol, and (f) a mixture of two or more of (a)-(e) above.

Examples of the lactic acid may include L-lactic acid, D-lactic acid, DL-lactic acid, a cyclic dimer thereof (i.e., L-lactide, D-lactide or DL-lactide) and mixtures thereof. Examples of the hydroxycarboxylic acid, other than lactic acid of the copolymer (b) above include, but are not limited to, glycolic acid, hydroxybutyric acid, hydroxyvaleric acid, hydroxycaproic acid and hydroxyheptoic acid. Examples of the aliphatic polyhydric alcohol monomers useful in the copolymer (c) or (e) above include, but are not limited to, ethylene glycol, 1,4-butanediol, 1,6-hexanediol, 1,4-cyclohexanedimethanol, neopentyl glycol, decamethylene glycol, glycerin, trimethylolpropane and pentaerythritol. Examples of the aliphatic polycarboxylic acid monomers useful in the copolymer (c) or (d) above include, but are not limited to, succinic acid, adipic acid, suberic acid, sebacic acid, dodecanedicarboxylic acid, succinic anhydride, adipic anhydride, trimesic acid, propanetricarboxylic acid, pyromellitic acid and pyromellitic anhydride.

The biodegradable or biorenewable foam is a low density polylactic acid foam, having density of less than 50 kg/m³. In another embodiment, the biodegradable or biorenewable foam has a density of less than 32 kg/m³. In an exemplary embodiment, the biodegradable or biorenewable foam has a density of less than 25 kg/m³.

The selection of carbon dioxide and co-blowing agents described herein allows for the production of a dimensionally stable, low density foam product. The low density foams may be produced using known blowing agents in novel combinations, which result in highly stable foams that do not suffer from post-production collapse over time. Dimensional stability of the foams may be quantified by a change in volume of the foam over a given period of time. The stability of the foams, however, may also be dependent on the given density of the foam. Without wishing to be bound to a particular theory, it is believed that a higher density foam will be more stable than a lower density foam because a higher density foam has more polymeric material (e.g., fewer open/closed cells) to form the foam structure. Thus, a high density foam will often have greater dimensional stability than a low density foam. Thus, the percentage volume change may vary based on the density of the foam.

In an exemplary embodiment of the invention, the biodegradable or biorenewable foam has a percentage density change of less than about 20% after aging relative to an initial foam volume, preferably less than about 10% after aging relative to initial foam volume, more preferably less than about 5% after aging relative to initial foam volume, even more preferably less than about 2% after aging relative to initial foam volume. In other words, the density increases no more than 20% from the initial density, preferably no more than about 10%, more preferably no more than about 5%, even more preferably no more than about 2%. In particular, for a foam having a density of about 25 to 49 kg/m³, the density change is preferably less than about 10% after aging. The initial foam density (or volume) maybe determined immediately after the foam is produced (e.g., initially cured).

Aging may include subjecting the foam to certain environmental conditions for a certain period of time. In an embodiment of the invention, the foam is aged under standard conditions for about 40 to 48 hours to determine the change in volume. The percentage density (or volume) change is preferably minimal, e.g., the initial density (or volume) and final density (or volume) are about the same. The density (or volume) may also decrease (or the volume increase) after foaming and/or aging. In other words, the density of the foam is greater after aging relative to initial foam density. This may occur because the blowing agent continues to cause foaming and the foam has not fully cured at the time of initial volume determination. This may also occur if a blowing agent combination is used that is less emissive than air, such that air diffuses into the foam faster than the blowing agent combination diffuses out, resulting in additional expansion of the foam. Thus, the density change may be from 0% to -2.5%. It is not desirous, however, for the aged foam density to be greater than the initial foam density (particularly substantially more) because this indicates an undesirable collapse of the foam structure. Thus, by selecting the combination of carbon dioxide and co-blowing agent described herein, a dimensionally stable, low density foam may be produced with minimal volume change after aging and minimal to no structural collapse.

As previously discussed, in order to produce low density foams using conventional blowing agents an additive, for example, was included with the polymeric resin during mixing in order to stabilize the resulting foam structure. In an exemplary embodiment of the present invention, however, no additional additives are added or present in the foamable biodegradable or biorenewable resin composition to maintain the dimensional stability of the biodegradable or biorenewable foam. Thus, no constituents are added to enhance the strength of the polymeric foam. Similarly, a special polymeric foam is not selected to have improved mechanical strength or prevent collapse. For example, a conventional polylactic acid resin may be selected and, using the blowing agent composition described herein, a low density, dimensionally stable foam is produced without any alternations to the polylactic acid resin.

Although, in one embodiment, no additives are used to improve the dimensional stability of the foam, other additives may be included in the resin composition. For example, a melt strength modifier may be used for a polylactic acid that is not foamable by itself. In the alternative, a foamable grade of polylactic acid may be used that does not require a melt strength modifer in order for foaming to occur. In the case where a non-foamable grade of polylactic acid includes a melt strength modifier additive to be foamable, the melt strength modifer is not included to improve or maintain dimensional stability of the resulting foam structure. By foamable, it is understood that bubbles are able to form and do not break. In other words, upon foaming conditions, a non-foamable grade of resin would either not initiate foaming or many of the pores formed would quickly rupture. In either case, a resulting foam structure would never form. Even if a melt strength modifier is added to cause a non-foamable resin to become a foamable type, the melt strength modifier is not intended to and is not expected to maintain or improve the dimensional stability of the resulting foam. In other words, when a non-foamable grade of polylactic acid is combined with a melt strength modifer and blowing agent compositions not in accordance with the present invention are used (e.g., carbon dioxide alone), the foam structure still collapses and poor dimensional stability results. However, when the blowing agent composition described herein is selected, irrespective of use of a melt strength modifier or not, low density foams with high dimensional stability are obtainable.

The foamable biodegradable or biorenewable resin composition may comprise at least one additive selected from the group consisting of nucleating agents, cell-controlling agents, viscosity modifiers, melt strength improvers/modifiers, lubricants, dyes, pigments, fillers, antioxidants, extrusion aids, stabilizing agents, antistatic agents, fire retardants, IR attenuating agents, additional polymers, and thermally insulating additives, and mixtures thereof. Nucleating agents may include, among others, materials such as talc, calcium carbonate, sodium benzoate, and chemical blowing agents, such as azodicarbonamide or sodium bicarbonate and citric acid. IR attenuating agents and thermally insulating additives may include carbon black, graphite, silicon dioxide, metal flake or powder, among others. Flame retardants may include, among others, phosphated or brominated materials, such as hexabromocyclodecane and polybrominated biphenyl ether.

The blowing agent composition may be prepared by any suitable mixing techniques known in the art. The blowing agent composition may also be mixed together simultaneously with the resin composition, for example, in an extruder during production of the foam.

The method of making a low density foam using a blowing agent composition comprises (a) mixing a blowing agent and a foamable resin to form an expandable resin composition, wherein the blowing agent comprises carbon dioxide and a co-blowing agent; and (b) initiating foaming of the expandable resin composition. Foaming may be initiated by any suitable techniques known in the art. For example, a polylactic acid resin may be fed to an extruder. The blowing agent composition is added to, mixed with, and dissolved in the melted polylactic acid resin in the extruder to form an expandable resin composition. Based on the polymer resin selected, an optimal melt temperature may be determined in order to introduce the blowing agent composition at optimal conditions. The expandable resin composition may be cooled to an appropriate foaming temperature, which may be determined by one skilled in the art based on the resin selected. The expandable resin composition may then be extruded from the die where the drop in pressure initiates foaming. Foaming may continue to occur until the blowing agent activity ceases or the foam is fully cured.

The foam may be produced using any equipment generally known to one skilled in the art. Foams may be typically produced using an extrusion system. Such an extrusion system may utilize a single extruder, two extruders in tandem, or other configurations. Extruders may be single-screw extruders, double-screw extruders, or some other configuration. Extrusion systems may incorporate additional equipment including shaping dies, gear pumps, resin feeders, blowing agent feed pumps, pullers, cutters, heat exchanges, and other pieces of equipment known to those skilled in the art. In a particular embodiment, a counter-rotating twin-screw extruder may be employed. It is envisioned, however, that the blowing agent composition may be incorporated with the resin composition using any suitable means, techniques, and equipment used by those skilled in the art. Similarly, the resulting foam shape may be any suitable shape produced in the art, such as a rod, a brick, a sheet, a strip, etc. The foam may have any desirable structure including open or closed cell pores. In a preferred embodiment, the foam is primarily a closed cell foam.

In an exemplary embodiment, a method of using a blowing agent composition to make a foam composition comprises (a) mixing a blowing agent and a foamable resin to form an expandable resin composition, wherein the blowing agent comprises carbon dioxide and a co-blowing agent; (b) cooling the expandable resin composition; and (c) extruding the expandable resin composition.

The blowing agent composition may be added to the foamable resin in any suitable state. For example, the blowing agent may be incorporated with the foamable resin in a gaseous state or a supercritical state. Additionally, the blowing agent composition may be added as either a physical or chemical blowing agent as is generally understood in the art. In particular, carbon dioxide may be introduced as a physical carbon dioxide source or a chemical carbon dioxide source. The co-blowing agent is preferably a physical blowing agent. Physical blowing agents are fed to the extruder and added to the resin melt in either the gaseous, liquid, or supercritical state, preferably in either the liquid or supercritical state. In a particular embodiment of the present invention, carbon dioxide and the co-blowing agent are physical blowing agents. In another embodiment, the blowing agent composition is formed in situ where the physical blowing agents, carbon dioxide and co-blowing agent, are separately fed to the extruder and added to the resin melt where they are mixed with the resin to form a foamable composition. In another embodiment of the present invention, the blowing agent composition is formed prior to mixing with the resin melt by feeding physical blowing agents, carbon dioxide and co-blowing agent, to a common injection point or mixing device where they are pre-mixed before adding to the resin melt. In another embodiment of the present invention, the blowing agent composition is formed during the mixing process where the co-blowing agent is a physical blowing agent and carbon dioxide is produced from a chemical blowing agent.

Thus, dimensionally stable, low density foams may be produced using formulations containing a specific blowing agent composition containing both carbon dioxide and a selected co-blowing agent. In particular, dimensionally stable PLA foams may be produced using the particular blowing agent combinations of carbon dioxide and the selected co-blowing agent with a lower density than can be produced using carbon dioxide alone or in combination with other conventional blowing agents.

Dimensionally PLA foams may be produced using HFO1243zf, HFO-1234yf, E-HFO-1234ze, and mixtures thereof.

### EXAMPLES

### PLA FOAM EXTRUSION

The following examples were shown to produce a low density foam with improved dimensional stability. Extruded polylactic acid (PLA) foam was produced using a counter-rotating twin-screw extruder with internal barrel diameters of 27 mm and a barrel length of 40 diameters. The pressure in the extruder barrel was controlled with a gear pump and was set high enough to allow the blowing agent composition to dissolve in the extruder. The extruder die was an adjustable-lip slot die with a gap width of 6.35 mm. A general purpose, foamable PLA resin was used for the foaming experiments, which contained 4 wt% of an acrylic copolymer melt strength modifier (Arkema BIOSTRENGTH® 700, which can be obtained from Arkema, Inc.) and 0.4 wt% talc, as nucleating agent. The resin was fed to the extruder at a rate of 4.54 kg/hr (10 lb/hr). The blowing agents were pumped into the PLA resin melt at a controlled rate using high pressure delivery pumps. In the extruder, the blowing agent was mixed and dissolved in the resin melt to produce an expandable resin composition. The expandable resin composition was cooled to an appropriate foaming temperature and then extruded from the die where the drop in pressure initiated foaming.

The density and open cell content were measured for foam samples collected during each run. Density was measured according to ASTM D792 and open cell content was measured using gas pychnometry according to ASTM D285-C. The dimensional stability of the foam samples was calculated as the percent change of foam volume as a function of time relative to the initial foam volume. Foam sample volume was determined using a simple water displacement technique.

A foam sample from the present examples was in the shape of a foamed rod. For aging purposes, the foamed rod was cut into samples from around six to ten inches long. The samples were stored at ambient conditions and periodically checked for volume and visual appearance.

### Reference Example 1:

A PLA foam was prepared using the method described above with 3.2 wt% CO₂ and 4.4 wt% HFC-134a (1,1,1,2-tetrafluoroethane) as the blowing agent composition. After aging for 40 hours, the foam had a density of 40.5 kg/m³.There was no observed change in the appearance of the foam, and there was no end-shrinkage.

### Comparative Example 1:

A PLA foam was prepared using the method described above, but instead using only 6.9 wt% CO₂ as the blowing agent. The resulting foam had an initial density of 43.6 kg/m³. After aging for 40 hours, the foam had a density of 45.5 kg/m³. There was also significant end-shrinkage.
Table 1 summarizes the results for Example 1 and Comparative Example 1.

**Table 1: Dimensional Stability of PLA Foams: aged 40 hours**

| Example | CO₂ (wt%) | HFC-134a (wt%) | Initial density (kg/m³) | Foam Appearance |
|---|---|---|---|---|
| Comparative Example 1 | 6.9 | 0.0 | 45.5 | end-shrinkage |
| Example 1 | 3.2 | 4.4 | 40.5 | no change |

As is evident from these results, a low density, dimensionally stable foam was produced using a blowing agent composition according to an embodiment of the present invention. There was no observed change in the appearance of the foam of Example 1, and there was no end-shrinkage.

### Examples 2 through 15 (Examples 2 though 11 being Reference Examples and Examples 12-15 being according to the invention) and Comparative Examples 2 through 7

Closed-cell, PLA foams were prepared in the same method as described above. For each foam sample, the density was measured immediately after foaming to provide the initial density. The samples were then aged at ambient conditions for about 48 hours, after which the density was again measured to provide the aged foam density. An increase in foam density (or decrease in sample volume) was indication of foam collapse caused by rapid diffusion of the blowing agent from the sample. In Comparative Examples 2 through 7 the blowing agent was essentially CO₂. In Examples 2 through 4 the blowing agent was essentially HFC-134a (1,1,1,2-tetrafluoroethane). In Examples 5 through 11 the blowing agents were CO₂ and HFC-134a. In Examples 12 through 15 the blowing agents were CO₂ and HFO-1243zf (3,3,3-trifluoropropene).

**Table 2: Dimensional Stability of PLA Foams: aged 48 hours**

| Example | Blowing Agent Loading | | | | | %Co-BA | Foam Density (Kg/m³ (pcf)) | | |
|---|---|---|---|---|---|---|---|---|---|
| | CO₂ | | 134a | | 1243zf | | | | |
| | (lb/hr) | (wt%) | (lb/hr) | (wt%) | (lb/hr) (wt%) | | Initial | 48-hr | % Change |
| Comp. 2 | 0.58 | 5.50 | | | | 0% | 29.8 (1.86) | 36.0 (2.25) | 21.0% |
| Comp. 3 | 0.58 | 5.50 | | | | 0% | 32.7 (2.04) | 35.9 (2.24) | 9.8% |
| Comp. 4 | 0.58 | 5.50 | | | | 0% | 35.5 (2.22) | 42.4 (2.65) | 19.4% |
| Comp. 5 | 0.58 | 5.50 | | | | 0% | 36.4 (2.27) | 49.2 (3.07) | 35.2% |
| Comp. 6 | 0.42 | 4.05 | | | | 0% | 64.9 (4.05) | 65.9 (4.12) | 1.7% |
| Comp. 7 | 0.78 | 7.25 | | | | 0% | 79.9 (4.99) | 79.9 (4.99) | 0.0% |
| | | | | | | | | | |
| 2 | | | 1.60 | 13.80 | | 100% | 35.4 (2.21) | 35.4 (2.21) | 0.0% |
| 3 | | | 1.60 | 13.80 | | 100% | 35.9 (2.24) | 35.6 (2.22) | -0.9% |
| 4 | | | 1.60 | 13.80 | | 100% | 36.7 (2.29) | 37.2 (2.32) | 1.3% |
| | | | | | | | | | |
| 5 | 0.58 | 5.34 | 0.32 | 2.94 | | 35.5% | 25.9 (1.62) | 25.9 (1.62) | 0.0% |
| 6 | 0.58 | 5.34 | 0.32 | 2.94 | | 35.5% | 26.1 (1.63) | 28.4 (1.77) | 8.6% |
| 7 | 0.42 | 3.93 | 0.32 | 2.98 | | 43.1% | 27.4 (1.71) | 28.4 (1.77) | 3.5% |
| 8 | 0.58 | 5.42 | 0.16 | 1.49 | | 21.6% | 31.9 (1.99) | 34.4 (2.15) | 8.0% |
| 9 | 0.70 | 6.37 | 0.32 | 2.90 | | 31.3% | 33.2 (2.07) | 34.6 (2.16) | 4.3% |
| 10 | 0.42 | 3.99 | 0.16 | 1.51 | | 27.5% | 37.2 (2.32) | 39.6 (2.47) | 6.5% |
| 11 | 0.78 | 7.15 | 0.16 | 1.46 | | 17.0% | 48.5 (3.03) | 47.4 (2.96) | -2.3% |
| | | | | | | | | | |
| 12 | 0.58 | 5.36 | | | 0.27 2.52 | 32.0% | 24.9 (1.56) | 25.6 (1.60) | 2.6% |
| 13 | 0.58 | 5.36 | | | 0.27 2.52 | 32.0% | 27.4 (1.71) | 28.8 (1.80) | 5.3% |
| 14 | 0.58 | 5.43 | | | 0.14 1.28 | 19.0% | 32.0 (2.00) | 31.7 (1.98) | -1.0% |
| 15 | 0.58 | 5.43 | | | 0.14 1.28 | 19.0% | 32.0 (2.00) | 33.6 (2.10) | 5.0% |

The examples show that at similar initial foam density, foams blown using only CO₂ as the blowing agent showed significantly higher density change than foams blown using CO₂ and either HFC-134a or HFO-1243zf as coblowing agents or with HFC-134a as the only blowing agent.

The results are further summarized in Figure 1, which plots the initial foam density versus the 48-hour aged foam density for foams with an initial density of less than 56 Kg/m³ (3.5 pcf). Figure 1 shows that for foams prepared using only CO₂ as the blowing agent about a 10% or greater change in foam density resulted whereas for foams prepared with HFC-134a or HFO-1243zf, either alone or as a co-blowing agent, less than a 10% change in density resulted.

### Blowing Agent Permeation Through PLA Film

The following examples show that the permeation rates through PLA film of tetrafluoropropenes are approximately the same or less than that of 1,1,1,2-tetrafluoroethane (HFC-134a). Since the aging of closed-cell foams is related to the permeation of blowing agents through films, the tetrafluoropropenes, particularly 2,3,3,3-tetrafluoropropene (HFO-1234yf) and trans-1,3,3,3-tetrafluoropropene (E-HFO-1234ze), can be used in the blowing agent combinations of the present invention in a similar fashion as HFC-134a.

A gas/membrane permeation cell was equipped with a film of a general purpose PLA as the membrane. The high-pressure chamber on one side of the membrane was maintained at a constant pressure with the blowing agent being tested. The low-pressure chamber on the other side of the membrane was maintained with a constant slow flow of helium; the low-pressure chamber was initially free of the blowing agent being tested. The low-pressure chamber was periodically sampled and analyzed by gas chromatography to monitor the concentration of the blowing agent in the helium stream which provides a measure for the permeation rate through the membrane.

### Example 16:

The permeation test described above was conducted with HFC-134a and with HFO-1234yf using a PLA film with a thickness of 3.2 - 3.5 mil. The permeation cell was operated with a back-pressure of blowing agent of 1.24 bar (18 psig) (high-pressure chamber) at 19°C. With HFC-134a a steady-state concentration was reached in the low-pressure side of approximately 1200 ppm in less than 2 minutes. With HFO-1234yf a steady-state concentration was reached in the low-pressure side of approximately 700 ppm in about 35 minutes and had reached 50% of the maximum value after about 5 minutes.

This example shows that the permeation rate of HFO-1234yf through PLA is less than that of HFC-134a under these conditions.

### Example 17:

The permeation test described above was conducted with HFC-134a and with E-HFO-1234ze using a PLA film with a thickness of 4.0 mil. The permeation cell was operated with a back-pressure of blowing agent of 2.2 bar (32 psig) (high-pressure chamber) at 23°C. With HFC-134a a steady-state concentration was reached in the low-pressure side of approximately 1000 ppm in less than 2 minutes. With E-HFO-1234ze a steady-state concentration was reached of < 150 ppm.

This example shows that the permeation rate of E-HFO-1234ze through PLA is less than that of HFC-134a under these conditions.

## Claims

1. A method of making a low density polylactic acid foam, of density below 50 kg/m³, using a blowing agent composition, the method comprising:
- mixing a blowing agent and a foamable polylactic acid resin to form an expandable resin composition, wherein the blowing agent comprises carbon dioxide and a co-blowing agent selected from the group consisting of 3,3,3-trifluoropropene, 2,3,3,3-tetrafluoropropene, trans-1,3,3,3-tetrafluoropropene, trans-1-chloro-3,3,3-trifluoropropene, and mixtures thereof; wherein
- the carbon dioxide and co-blowing agent are added in amounts of 3-15% wt. and 1-5% wt., respectively, with respect to the amount of foamable thermoplastic resin; and
- initiating foaming of the expandable resin composition.

2. The method of making a low density foam using a blowing agent according to claim 1, wherein the carbon dioxide is introduced as a physical carbon dioxide source or a chemical carbon dioxide source.

3. The method according to claim 1, wherein the co-blowing agent is 3,3,3-trifluoropropene.

4. The method according to claim 1, wherein the co-blowing agent is 2,3,3,3-tetrafluoropropene.

5. The method according to claim 1, wherein the co-blowing agent is trans-1,3,3,3 -tetrafluoropropene.

6. The method of making a low density polylactic acid foam using a blowing agent according to claim 1, wherein the resulting foam has a density of less than about 32 kg/m³, preferably of less than 25 kg/m³.

7. The method of making a low density polylactic acid foam using a blowing agent according to claim 1, wherein initiation is carried out by:
- cooling the expandable resin composition; and
- extruding the expandable resin composition.

## Patentansprüche

1. Verfahren zur Herstellung eines Polymilchsäure-Schaumstoffs niedriger Dichte mit einer Dichte von weniger als 50 kg/m³ unter Verwendung einer Treibmittelzusammensetzung, wobei das Verfahren Folgendes umfasst:
- Mischen eines Treibmittels und eines verschäumbaren Polymilchsäureharzes zur Bildung einer expandierbaren Harzzusammensetzung, wobei das Treibmittel Kohlendioxid und ein Cotreibmittel aus der Gruppe bestehend aus 3,3,3-Trifluorpropen, 2,3,3,3-Tetrafluorpropen, trans-1,3,3,3-Tetrafluorpropen, trans-1-Chlor-3,3,3-trifluorpropen und Mischungen davon umfasst, wobei
- das Kohlendioxid und das Cotreibmittel in Mengen von 3-15 Gew.-% bzw. 1-5 Gew.-%, bezogen auf die Menge an verschäumbarem thermoplastischem Harz, zugegeben werden, und
- Initiieren der Verschäumung der expandierbaren Harzzusammensetzung.

2. Verfahren zur Herstellung eines Schaumstoffs niedriger Dichte unter Verwendung eines Treibmittels nach Anspruch 1, wobei das Kohlendioxid als physikalische Kohlendioxidquelle oder chemische Kohlendioxidquelle eingetragen wird.

3. Verfahren nach Anspruch 1, wobei es sich bei dem Cotreibmittel um 3,3,3-Trifluorpropen handelt.

4. Verfahren nach Anspruch 1, wobei es sich bei dem Cotreibmittel um 2,3,3,3-Tetrafluorpropen handelt.

5. Verfahren nach Anspruch 1, wobei es sich bei dem Cotreibmittel um trans-1,3,3,3-Tetrafluorpropen handelt.

6. Verfahren zur Herstellung eines Polymilchsäure-Schaumstoffs niedriger Dichte unter Verwendung eines Treibmittels nach Anspruch 1, wobei der resultierende Schaumstoff eine Dichte von weniger als etwa 32 kg/m³, vorzugsweise von weniger als 25 kg/m³, aufweist.

7. Verfahren zur Herstellung eines Polymilchsäure-Schaumstoffs niedriger Dichte unter Verwendung eines Treibmittels nach Anspruch 1, wobei die Initiierung durch
- Abkühlen der expandierbaren Harzzusammensetzung und
- Extrudieren der expandierbaren Harzzusammensetzung
durchgeführt wird.

## Revendications

1. Procédé de fabrication d'une mousse de poly(acide lactique) basse densité, de densité en dessous de 50 kg/m³, à l'aide d'une composition d'agent de gonflement, le procédé comprenant :
- le mélange d'un agent de gonflement et d'une résine de poly(acide lactique) moussable pour former une composition de résine expansible, l'agent de gonflement comprenant du dioxyde de carbone et un co-agent de gonflement choisi dans le groupe constitué par le 3,3,3-trifluoropropène, le 2,3,3,3-tétrafluoropropène, le trans-1,3,3,3-tétrafluoropropène, le trans-1-chloro-3,3,3-trifluoropropène, et des mélanges correspondants ;
- le dioxyde de carbone et le co-agent de gonflement étant ajoutés en des quantités respectivement de 3 à 15 % en poids et 1 à 5 % en poids, par rapport à la quantité de résine thermoplastique moussable ; et
- l'initiation du moussage de la composition de résine expansible.

2. Procédé de fabrication d'une mousse basse densité à l'aide d'un agent de gonflement selon la revendication 1, le dioxyde de carbone étant introduit en tant qu'une source physique de dioxyde de carbone ou en tant qu'une source

3. Procédé selon la revendication 1, le co-agent de gonflement étant le 3,3,3-trifluoropropène.

4. Procédé selon la revendication 1, le co-agent de gonflement étant le 2,3,3,3-tétrafluoropropène.

5. Procédé selon la revendication 1, le co-agent de gonflement étant le trans-1,3,3,3-tétrafluoropropène.

6. Procédé de fabrication d'une mousse de poly(acide lactique) basse densité à l'aide d'un agent de gonflement selon la revendication 1, la mousse résultante possédant une densité inférieure à environ 32 kg/m³, préférablement inférieure à 25 kg/m³.

7. Procédé de fabrication d'une mousse de poly(acide lactique) basse densité à l'aide d'un agent de gonflement selon la revendication 1, l'initiation étant mise en œuvre par :
- refroidissement de la composition de résine expansible ; et
- extrusion de la composition de résine expansible.
